# EUROPÄISCHE PATENTSCHRIFT

(11) **EP 3 059 036 B1**
(45) Veröffentlichungstag und Bekanntmachung des Hinweises auf die Patenterteilung: **26.04.2017**
(21) Anmeldenummer: 15171103.3
(22) Anmeldetag: 09.06.2015
(51) Int. Cl.: B23B 31/167, B23B 31/28, B23Q 1/00

(54) **SPANNFUTTER MIT ELEKTROMOTOREN**
COLLET CHUCK WITH ELECTRIC MOTORS
MANDRIN AVEC MOTEURS ÉLECTRIQUES

(30) Priorität: 04.12.2014 EP 14196366
(43) Veröffentlichungstag der Anmeldung: 24.08.2016
(73) Patentinhaber: SMW-AUTOBLOK Spannsysteme GmbH, 88074 Meckenbeuren (DE)
(72) Erfinder: Maurer, Eckhard, 88094 Oberteuringen (DE)
(74) Vertreter: Engelhardt & Engelhardt

(56) Entgegenhaltungen:
- EP-A1- 2 298 475
- EP-A1- 2 676 756
- EP-A1- 2 837 466
- WO-A2-2013/023823
- US-A- 1 974 249
- US-A1- 2009 080 990

## Beschreibung

Die Erfindung bezieht sich auf ein Spannfutter zur Abstützung von rotationssymmetrischen Werkstücken nach dem Oberbegriff des Patentanspruches 1, das aus dem Dokument US 1 974 249 A bekannt ist.

Solche Spannfutter sind in vielfacher unterschiedlich konstruktiver Ausprägung bekannt und können beispielsweise der EP 2676756 A1 entnommen werden. Diese Spannfutter dienen im Wesentlichen dazu, ein rotationssymmetrisches Werkstück im Raum zentrisch zu einer Längsachse einer Werkzeugmaschine zu lagern, so dass dieses möglichst exakt bearbeitet werden kann, um die Bearbeitungsfehlertoleranzen so gering wie möglich zu halten. Zur Abstützung der Werkstücke sind mindestens drei Spannbacken vorzusehen, die in einer der Stirnseite des Futterkörpers des Spannfutters eingearbeitete Führungsbahnen verschiebbar gelagert sind. Diese Spannbacken werden üblicherweise mittels eines Betätigungskolbens, der beispielsweise pneumatisch oder hydraulisch betrieben ist, synchron bewegt, so dass diese gleichzeitig auf die Oberfläche des einzuspannenden Werkstückes auftreffen und dieses aufgrund der Zustellkraft des Betätigungskolbens einspannen.

Da durch die Spannbacken eine Zentrierung des einzuspannenden Werkstückes oftmals nicht derart exakt vorgenommen werden kann, ist es erforderlich, drei weitere Zentrierbacken vorzusehen, durch die die Position des Werkstückes im Raum möglichst koaxial zu der Längsachse des Futterkörpers ausgerichtet ist. Sobald diese zentrische Position des Werkstückes erreicht ist, können die Spannbacken zugestellt werden und die Zentrierbacken werden von der Oberfläche des Werkstückes entfernt.

Während des Bearbeitungsvorganges rotiert das Spannfutter und der Betätigungskolben übt eine konstante Spannkraft auf die Spannbacken und damit auf das Werkstück aus. Eine Veränderung der Position der Spannbacken ist während des Bearbeitungsvorganges nicht möglich. Durch den Bearbeitungsvorgang reduziert sich das Eigengewicht des Werkstückes oftmals in einem Maße, das dazu führt, dass die zentrische Position des eingespannten Werkstückes verlorengeht. Folglich ist anschließend durch die Zentrierbacken erneut eine exakte Ausrichtung des Werkstückes einzustellen. Solche Zentrierungsvorgänge verlängern den Bearbeitungsvorgang und damit steigen die Betriebskosten zur Herstellung solcher Werkstücke erheblich.

Es ist daher Aufgabe der Erfindung, ein Spannfutter der eingangs genannten Gattung derart weiterzubilden, dass durch das Spannfutter zum einen der Einspann- und Zentriervorgang ausschließlich mittels eines Spannbackeneinsatzes zu bewerkstelligen ist und dass zum anderen während des Bearbeitungsprozesses ohne Umrüstmaßnahmen eine Zentrierung des eingespannten Werkstückes möglich ist.

Diese Aufgaben sind erfindungsgemäß durch die Merkmale des Anspruchs 1 gelöst. Weitere vorteilhafte Weiterbildungen der Erfindung ergeben sich aus den Unteransprüchen.

Dadurch, dass die Elektromotoren im Stillstand des Spannfutters über eine Steckverbindung und elektrische Leitungen mit einer Stromquelle und im Betriebszustand des Spannfutters über jeweils eine Induktivitäts-Einrichtung mit der Stromquelle elektrisch gekoppelt sind, können die vorhandenen Spannbacken sowohl zur Arretierung und Abstützung der zu bearbeitenden Werkstücke als auch zu deren Zentrierung im Raum verwendet werden, denn durch die individuelle Ansteuerung der jeweiligen Spannbacken können diese wechselweise gegenläufig und/oder in ihrer Position gehalten werden, so dass in Abhängigkeit von der gemessenen Abweichung zur vorgegebenen Zentrierung die entsprechende Bewegung der Spannbacken erfolgt.

Zur Bewegung der Spannbacken, während das Werkstück eingespannt ist, sich also somit im Bearbeitungsprozess befindet, ist es lediglich notwendig, den Futterkörper derart auszurichten, dass die drei im Inneren des Futterkörpers vorhandenen Ladestationen fluchtend zu den Kopplungsstationen der induktiven Einrichtung ausgerichtet sind, so dass aufgrund der vorherrschenden Induktivität eine ausreichende Energieübertragung an die jeweiligen Elektromotoren gewährleistet ist. Durch diese Energieübertragung können dann durch die Steuereinrichtung die Elektromotoren in zwei unterschiedliche Rotationsrichtungen bewegt werden, so dass die jeweilige Spannbacke entweder in Richtung der Längsachse des Futterkörpers oder dazu entgegengesetzt bewegbar ist. Somit können die Positionen der Spannbacken individuell positioniert werden, wodurch eine exakte Zentrierung des einzuspannenden und zu haltenden Werkstückes erreicht ist.

Während das Spannfutter stillgesetzt ist, beispielsweise um die Werkstücke zu wechseln, können die elektrischen Zuleitungen des Elektromotors mittels einer Steckverbindung an eine übliche Stromquelle angeschlossen werden, so dass für die Zustellung und Zentrierung der Werkstücke im Stillstandzustand des Spannfutters genügend Energie zur Verfügung steht. Die durch die Induktivitäts-Einrichtung übertragene geringere Energiemenge reicht jedoch aus, um die Elektromotoren derart anzutreiben, dass die Spannbacken geringfügig verstellbar sind.

In der Zeichnung ist ein erfindungsgemäßes Ausführungsbeispiel eines Spannfutters dargestellt, das nachfolgend näher erläutert ist. Im Einzelnen zeigt:
- Figur 1: ein Spannfutter, mit einem Futterkörper in dessen Stirnseite drei Führungsbahnen eingearbeitet sind, mit drei Spannbacken, die einzeln in einer der Führungsbahnen verschiebbar eingesetzt sind und mit drei der jeweiligen Spannbacken zugeordneten Elektromotoren, durch die die Spannbacken in ihrer Position verstellbar sind und mit einer Steuereinheit, durch die die Elektromotoren regelbar sind, in Draufsicht,
- Figur 2a: das Spannfutter gemäß Figur 1, in einem vergrößerten Teilausschnitt, im Bereich einer der Spannbacken, im geöffneten Zustand,
- Figur 2b: den Teilausschnitt gemäß Figur 2a des Spannfutters, während der Zustellbewegung der Spannbacke und
- Figur 2c: den Ausschnitt gemäß Figur 2b des Spannfutters, im Spannzustand.

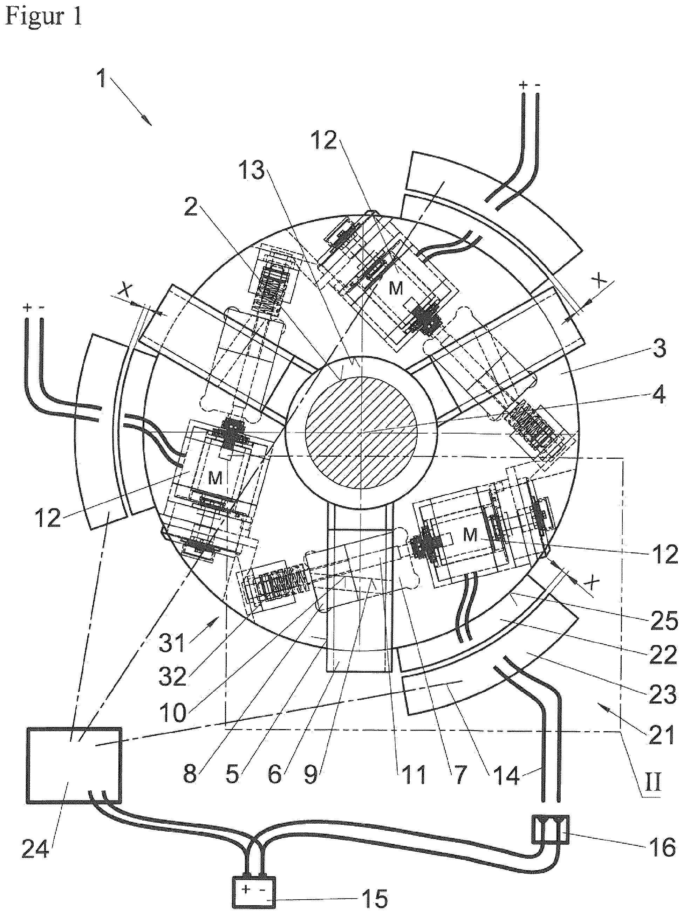

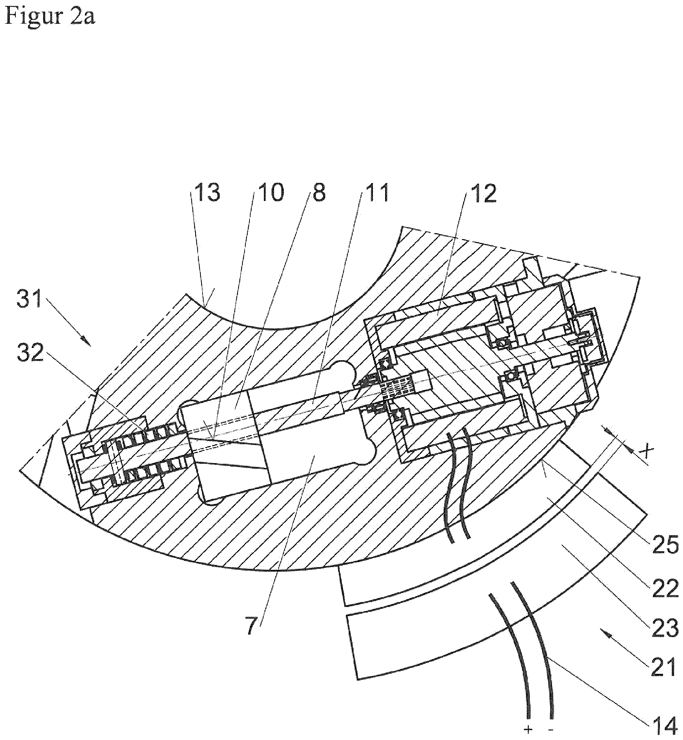

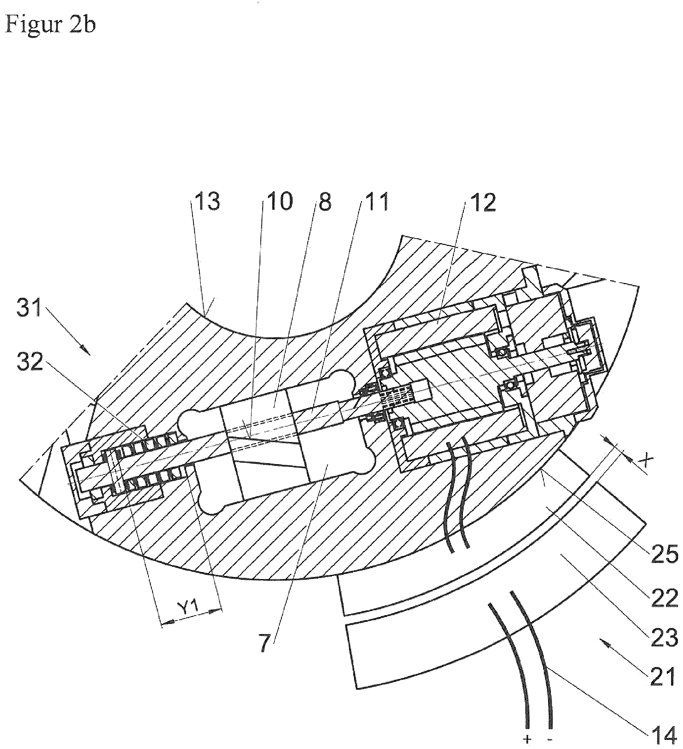

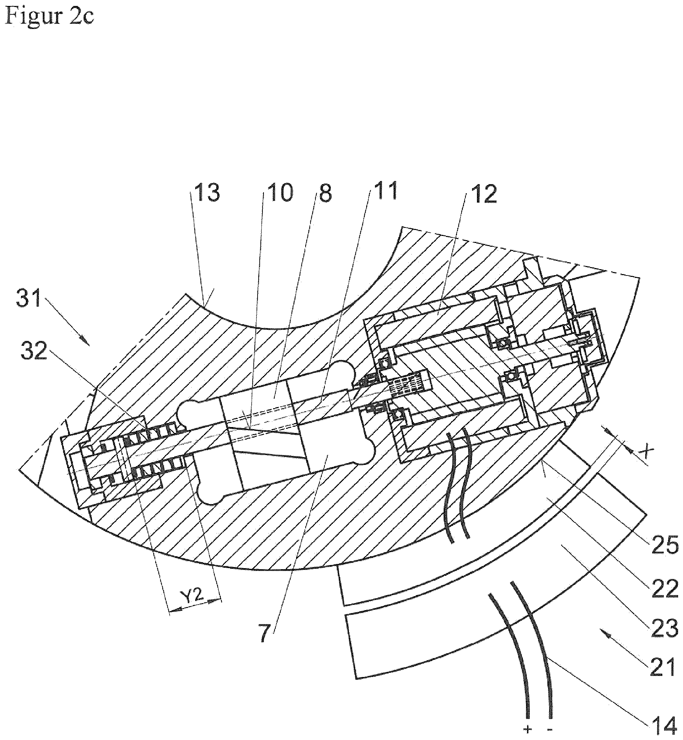

Aus den Figuren 1, 2a, 2b und 2c ist ein Spannfutter 1 zu entnehmen, das dazu dient, rotationssymmetrische Werkstücke 2 im Raum an einer nicht dargestellten Werkzeugmaschine zu halten. Das Spannfutter 1 besteht aus einem rotationssymmetrischen Futterkörper 3, dessen Längsachse mit der Bezugsziffer 4 versehen ist. Zur Bearbeitung des Werkstückes 2 ist es erforderlich, dieses exakt fluchtend zu der Längsachse 4 des Futterkörpers 3 zu positionieren bzw. auszurichten. Wenn nämlich die Längsachse des Werkstückes 2 nicht fluchtend zu der Längsachse 4 des Futterkörpers 3 verläuft, entstehen während des Bearbeitungsvorganges Herstellungsfehler. Durch das erfindungsgemäße Spannfutter 1 soll demnach nicht nur die fluchtende Ausrichtung des Werkstückes 2 zu der Längsachse 4 des Futterkörpers 3 mit möglichst wenig zeitlichem und konstruktivem Aufwand einstellbar sein, sondern durch das Spannfutter 1 soll das Werkstück 2 während des Spannzustandes lageorientiert zu verstellen bzw. dessen Ausrichtung soll nachjustierbar sein, ohne den Spannzustand lösen zu müssen.

In einer der Stirnseiten des Futterkörpers 3 sind drei radial bzw. in Richtung der Längsachse 4 verlaufende Führungsbahnen 5 eingearbeitet. In jede der Führungsbahnen 5 ist eine Spannbacke 6 verschiebbar gelagert. An der in Richtung des Futterkörpers 3 weisende Unterseite der jeweilige Spannbacke 6 ist eine Schrägverzahnung 9 angearbeitet, die in formschlüssiger Wirkverbindung mit einer Keilstange 8 steht. Die Keilstange 8 ist verschiebbar in einer Aufnahmeöffnungen 7 des Futterkörpers 3 gelagert, die in dem Futterkörper 3 eingearbeitet sind. Es ist auch denkbar, die Keilstange 8 durch Keilhaken oder andersartig ausgestaltete Kraftübertragungsmittel zu ersetzen.

Die Keilstange 8 weist eine Schrägverzahnung 10 auf, die in trieblicher bzw. formschlüssiger Wirkverbindung mit der Schrägverzahnung 9 der jeweiligen Spannbacke 6 steht, so dass bei der Betätigung bzw. Bewegung der Keilstange 8 eine Relativbewegung zwischen dieser und der Spannbacke 6 entsteht, durch die die Spannbacke 6 in Richtung der Längsachse 4 des Futterkörpers 3 oder entgegengesetzt dazu bewegbar ist.

Zur Betätigung der jeweiligen Keilstange 8 ist in dem Futterkörper 3 jeweils eine diesen Keilstangen 8 zugeordneten Gewindespindel 11 vorgesehen, die sowohl mit der jeweiligen Keilstange 8 als auch mit einem im Inneren des Futterkörpers 3 eingebauten Elektromotors 12 steht. Dabei ist jeder der drei Spannbacken 6 jeweils einer der Elektromotoren 12 zugeordnet, so dass über jeden Elektromotor 12 eine der Spannbacken 6 vereinzelt bewegbar bzw. antreibbar ist. Die Gewindespindeln 11 und die Keilstangen 8 dienen zur Kraftübertragung des Drehmomentes von dem Elektromotor 12 auf die Spannbacke 6.

Jeder der Elektromotoren 12 ist über eine elektrische Leitung 14 mit einer Steuereinheit 24, die außerhalb des Futterkörpers 3 angeordnet ist, verbunden. Um die Elektromotoren 12, die als Antriebsmittel für die Spannbacken 6 benutzt werden, mit ausreichender Spannung bzw. Energie zu versorgen, ist jeder der Leitungen 14 eine Steckverbindung 16 zugeordnet, die im Stillstandszustand der Werkzeugmaschine über einen Stecker und elektrischen Leitungen 14 mit einer Stromquelle verbunden ist. Durch die Stromquelle 15 wird demnach die notwendige Energie an die Elektromotoren 12 abgegeben, die notwendig ist, um den Spannzustand für die Spannbacken 6 bzw. den Entriegelungsvorgang der Spannbacken 6 herbeizuführen. Insbesondere beim Wechseln des Werkstückes 2 aus dem Spannfutter 1 steht dieses still, so dass der Futterkörper 3 nicht rotiert, so dass die Steckverbindungen 16 zwischen der Stromquelle 15 und den drei Elektromotoren 12 vorgenommen werden kann.

Während des Bearbeitungsvorganges rotiert der Futterkörper 3 des Spannfutters 1, so dass dann die Steckverbindung 16 zwischen dem Futterkörper 3 und der Stromquelle 15 zu lösen ist. Während der Rotation des Futterkörpers 3 ist jedoch zu gewährleisten, dass die Spannkraft, die von den Spannbacken 6 auf das eingespannte Werkstück 2 weiterhin ausgeübt wird bzw. verloren geht. Zu diesem Zweck ist zunächst jeder Spannbacke 6 eine Kraftspeichereinrichtung 31, die in Form einer Schraubendruckfeder 32 ausgestaltet ist, zugeordnet. Die Kraftspeichereinrichtung 31 übt demnach eine Spannkraft auf die Spannbacken 6 aus, die über die Gewindespindel 11 und die Keilstange 8 übertragen ist. Das Drehmoment des Elektromotors 12 ist dabei größer bemessen, als die Spannkraft der jeweiligen Schraubendruckfeder 32. Folglich kann der Elektromotor 12 entgegen der Federkraft der Schraubendruckfeder 32 diese betätigen und die Gewindespindel 11, die Keilstange 8 und folglich auch die jeweilige Spannbacke 6 in Richtung der Längsachse 4 des Futterkörpers 3 oder entgegengesetzt zu dieser bewegen.

Um eine Positionsveränderung der Spannbacken 6 während des Spannzustandes vornehmen zu können, ohne dass die Steckverbindung 16 zwischen den Elektromotoren 12 und der Stromquelle 15 herzustellen ist, sind drei Induktivitätseinrichtungen 21 vorgesehen, die aus einem der Werkzeugmaschine, also außerhalb des Futterkörpers 3, zugeordnete Kopplungsteil 22 und einem im Inneren des Futterkörpers 3 angeordneten Ladeteil 23 bestehen. Die Kopplungsteile 22 und Ladeteile 23 weisen eine Vielzahl von Windungen auf, so dass, wenn den Kopplungsteilen 22 und den Ladeteilen 23 im Stillstand der Werkzeugmaschine fluchtend übereinander liegen, eine bestimmte Energieübertragung stattfinden kann, durch die die jeweiligen Elektromotoren 12 mit ausreichender Energie zur Positionsveränderung der Spannbacken 6 betrieben sind.

Figur 2a kann dabei entnommen werden, in welcher Position sich dabei die Schraubendruckfeder 32 der Kraftspanneinrichtung 31 in Bezug auf die Position der Gewindespindel 11 befindet. Die Gewindespindel wird von dem Ausgangszustand gemäß Figur 2a durch den Elektromotor 12 in Rotation versetzt und bewegt die jeweilige Keilstange 8 linear, wodurch über die Schrägverzahnungen 10 und 11 zwischen dieser und der jeweiligen Spannbacke 6 eine Positionsveränderung der Spannbacke 6 in Bezug auf den Abstand zu der Längsachse 4 des Futterkörpers 3 einstellbar ist.

In Figur 2b ist eine Mittelstellung und in Figur 2c die Spannstellung der jeweiligen Spannbacken 6 zu entnehmen. Durch die Steuereinrichtung 24 können demnach die Induktivitätseinrichtungen 21, also das Kopplungsteil 22 und das Ladeteil 23, individuell betrieben werden, so dass die jeweiligen Elektromotoren 12, die ebenfalls mit der Steuereinrichtung 24 gekoppelt sind, abwechselnd oder gleichzeitig in Richtung der Längsachse 4 des Futterkörpers 3 oder entgegengesetzt dazu bewegbar sind. Folglich kann durch die individuelle Positionsveränderung der Spannbacken 6 über den Betrieb des jeweiligen Elektromotors 12 sowohl eine Zentrierung des Werkstückes 2 bezogen auf die Längsachse 4 des Futterkörpers 3 erfolgen, als auch eine ausreichende Spannkraft zur Abstützung des zu haltenden Werkstückes 2 permanent zur Verfügung gestellt werden, denn die Position der Gewindespindel 11 und damit der Keilstange 8 und der Spannbacke 6 wird über die Kraftspeichereinrichtung 31 vorgegeben. Eine Positionsveränderung der Gewindespindel 11 ist ausschließlich mit Hilfe des jeweiligen Elektromotors 12 möglich.

In das Spannfutter 1 kann eine Durchgangsöffnung 13 eingearbeitet sein, durch die beispielsweise ein langes Rohr als Werkstück 2 einführbar ist. Oftmals werden nämlich solche Spannfutter 1 auch zur Bearbeitung von Außengewinden auf Leitungsrohren für Öl bzw. Gaspipelines verwendet. Die erfindungsgemäße Ausgestaltung des Spannfutters 1 bezieht sich jedoch auf jede Art von Spannfutter 1, unabhängig von deren Verwendungszweck, konstruktiver Ausgestaltung oder deren Größenabmessungen.

In den Figuren 1 bis 2c sind zwei alternative Ausgestaltungsmöglichkeiten des Spannfutters 1 zu entnehmen. Zum einen kann jeder der drei abgebildeten Elektromotoren 12 über die Steckverbindung 16 mit der Stromquelle 15 elektrisch gekoppelt sein, so dass im Stillstandszustand des Futterkörpers 3 die erforderliche elektrische Bestromung der Elektromotoren 12 von der Stromquelle 15 abgenommen ist. Dadurch werden die jeweiligen Spannbacken 6 in den Führungsbahnen 5 des Futterkörpers 3 geöffnet bzw. geschlossen, um den Spannzustand zu erreichen.

Eine weitere Alternative für die Bestromung der Elektromotoren 12 erfolgt zum anderen über die Induktivitäts-Einrichtung 21, deren Kopplungsteil 22 der Werkzeugmaschine zugeordnet und dessen Ladeteil 23 dem Futterkörper 3 angeordnet ist. Folglich kann die Bestromung der Elektromotoren 12 sowohl im Stillstandszustand des Futterkörpers 3 als auch im Rotationszustand bzw. im Spannungszustand der Spannbacken 6 vorgenommen werden, da zwischen dem Lade- und Kopplungsteil 22, 23 ein Luftspalt vorgesehen ist, so dass zwischen dem Futterkörper 3 und der Induktivitäts-Einrichtung 21 keine Reibung herrscht.

## Patentansprüche

1. Spannfutter (1) zur Abstützung von rotationssymmetrischen Werkstücken (2), die mittels einer Werkzeugmaschine zu bearbeiten sind,
bestehend aus:
- einem Futterkörper (3), in dessen einen Stirnseite mindestens drei in Richtung der Längsachse (4) des Futterkörpers (3) ausgerichtete Führungsbahnen (5) eingearbeitet sind,
- aus mindestens drei Spannbacken (6), die einzelnen in einer der Führungsbahnen (5) verschiebbar gelagert sind und
- aus einem Antriebsmittel (12), das trieblich mit den Spannbacken (6) unmittelbar oder über Zwischenglieder (8,11) verbunden ist,
wobei das Antriebsmittel als Elektromotor (12) ausgestaltet ist, wobei jeder Spannbacke (6) ein Elektromotor (12) zugeordnet ist und wobei jeder Elektromotor (12) im Inneren des Futterkörpers (3) angeordnet ist und
**dadurch gekennzeichnet,**
**dass** die Elektromotoren (12) im Stillstand des Spannfutters (1) über eine Steckverbindung (16) und elektrische Leitungen (14) mit einer Stromquelle (15) und/oder im Rotations- oder Stillstandszustand des Spannfutters (1) über jeweils eine Induktivitäts-Einrichtung (21, 22, 23) mit der Stromquelle elektrisch gekoppelt sind.

2. Spannfutter nach Anspruch 1,
**dadurch gekennzeichnet,**
**dass** jede der Induktivitäts-Einrichtungen (21) aus einem stationären der Werkzeugmaschine zugeordneten Kopplungsteil (22) und aus einem in dem Futterkörper (3) eingebauten Ladeteil (23) gebildet ist und dass zwischen dem Ladeteil (23) und dem jeweiligen Elektromotor (12) eine elektrische Leitung (14) vorgesehen ist.

3. Spannfutter nach Anspruch 1 oder 2,
**dadurch gekennzeichnet,**
**dass** jede der Spannbacken (6) eine dem Futterkörper (3) zugewandte Schrägverzahnung (9) aufweist, dass in dem Futterkörper (3) für jede Spannbacke (6) eine Keilstange (8) verschiebbar in diesem gelagert ist, dass die Keilstange (8) eine mit der Schrägverzahnung (9) der Spannbacken (6) korrespondierende Schrägverzahnung (10) aufweist, dass die Spannbacke (6) und die Keilstange (8) formschlüssig kuppelbar sind und dass die Keilstange (8) in einer trieblichen Wirkverbindung mit einer Gewindespindel (11) steht, die trieblich mit dem jeweiligen Elektromotor (12) zusammen wirkt.

4. Spannfutter nach einem der vorgenannten Ansprüche,
**dadurch gekennzeichnet,**
**dass** die Spannposition der Spannbacken (6) mittels einer Kraftspeicher-Einheit (31) bewerkstelligt ist, durch die jede der Spannbacken (6) in seiner von dem Elektromotor (12) vorgegebenen Stellung arretiert ist.

5. Spannfutter nach Anspruch 4,
**dadurch gekennzeichnet,**
**dass** die Kraft des Elektromotors (12) größer bemessen ist als die Arretierungskraft der Kraftspeicher-Einrichtung (31).

6. Spannfutter nach Anspruch 4 oder 5,
**dadurch gekennzeichnet,**
**dass** die Kraftspeicher-Einrichtung (31) als Tellerfederpaket oder als Schraubendruckfeder (32) ausgestaltet ist, deren jeweilige Speicherkraft der Zustellbewegung des Elektromotors (12) entgegengesetzt ausgerichtet ist.

7. Spannfutter nach einem der vorgenannten Ansprüche,
**dadurch gekennzeichnet,**
**dass** in den Futterkörper (3) eine Durchgangsöffnung (13) zur Aufnahme der zu bearbeitenden Werkstücke (2) eingearbeitet ist und dass die Längsachse der Durchgangsöffnung (13) fluchtend zu der Längsachse des Futterkörpers (4) aus gerichtet ist.

8. Spannfutter nach einem der vorgenannten Ansprüche,
**dadurch gekennzeichnet,**
**dass** jeder Elektromotor (12) über eine der Werkzeugmaschine zugeordneten Steuereinrichtung (24) geregelt ist, durch die die Position der jeweiligen Spann backe (6) in Abhängigkeit von der Ausrichtung des einzuspannenden Werkstü ckes (2) einstellbar ist.

## Claims

1. A chuck (1) for supporting rotationally symmetrical workpieces (2) that are to be machined using a machine tool,
consisting of
- a chuck body (3) that has at least three guideways (5) worked into its end face running in the direction of the longitudinal axis (4) of the chuck (3),
- at least three clamping jaws (6) that are inserted individually into each of the guideways (5) in a movable arrangement and
- a driving means (12) in a driving connection with the clamping jaws (6) directly or via intermediate elements (8, 11),
in which the driving means are configured as an electric motor (12), each clamping jaw (6) has an electric motor (12) allocated to it and each electric motor (12) is arranged inside the chuck body (3) and
**characterised in that,**
when the chuck (1) is stationary, the electric motors (12) are electrically connected to a power source (15) by means of a plug-and-socket connection (16) and electrical cables (14) and/or when the chuck (1) is rotating or at a standstill each is connected to the power source via an induction device (21, 22, 23).

2. The chuck in accordance with Claim 1,
**characterised in that,**
each of the induction devices (21) is configured from a stationary coupling section (22) allocated to the machine tool and a charging section (23) installed in the chuck body (3) and that an electrical cable (14) is provided between the charging section (23) and the electric motor.

3. The chuck in accordance with Claim 1 or 2,
**characterised in that,**
each of the clamping jaws (6) has helical gearing (9) facing the chuck body (3), that a wedge bar (8) is mounted in a movable arrangement in the chuck body (3) for each clamping jaw (6), that the wedge bar (8) has helical gearing (10) corresponding to the helical gearing (9) of the clamping jaws (6), that the clamping jaw (6) and the wedge bar (8) can be connected together in a positive arrangement and that the wedge bar (8) is in a driving active connection with a threaded spindle (11) that interacts in a driving arrangement with the particular electric motor (12).

4. The chuck in accordance with one of the aforementioned claims,
**characterised in that,**
the clamping position of the clamping jaws (6) is achieved by means of a force accumulator device (31) by means of which each of the clamping jaws (6) is locked in its position that is specified by the electric motor (12).

5. The chuck in accordance with Claim 4,
**characterised in that,**
the force of the electric motor (12) is larger than the locking force of the force accumulator device (31).

6. The chuck in accordance with Claim 4 or 5,
**characterised in that,**
the force accumulator device (31) is configured as a cup spring pack or as a coiled compression spring (32), the particular stored force of which is vectored opposite to the advance movement of the electric motor (12).

7. The chuck in accordance with one of the aforementioned claims,
**characterised in that,**
a passage opening (13) is worked into the chuck body (3) for accommodating the workpieces (2) to be machined, and that the longitudinal axis of the passage opening (13) is in alignment with the longitudinal axis (4) of the chuck body (3).

8. The chuck in accordance with one of the aforementioned claims,
**characterised in that,**
each electric motor (12) is controlled by means of a control unit (24) allocated to the machine tool, by means of which the position of the particular clamping jaw (6) can be set depending on the alignment of the workpiece (2) to be clamped.

## Revendications

1. Mandrin de serrage (1) servant à l'appui de pièces à usiner à symétrie de rotation (2) qui doivent être usinées à l'aide d'une machine-outil, comprenant :
- un corps de mandrin (3) dans une face frontale duquel il est pratiqué au moins trois pistes de guidage (5) orientées en direction de l'axe longitudinal (4) du corps de mandrin (3),
- au moins trois mors de serrage (6) logés individuellement et de manière mobile dans une des pistes de guidage (5) et
- un moyen d'entraînement (12) lié soit directement soit par l'intermédiaire d'éléments (8, 11) avec les mors de serrage (6),
le moyen d'entraînement étant conçu sous la forme d'un moteur électrique (12), où à chaque mors de serrage (6), il est assigné un moteur électrique (12) et où chaque moteur électrique (12) est logé à l'intérieur du corps de mandrin (3),
**caractérisé en ce que**
à l'immobilisation du mandrin de serrage (1), les moteurs électriques (12) sont accouplés à l'aide d'un raccord à insertion (16) et de lignes électriques (14) à une source de courant (15), et/ou qu'à la rotation ou à l'arrêt du mandrin de serrage (1), ils sont accouplés par respectivement un équipement à induction (21, 22, 23) avec la source de courant.

2. Mandrin de serrage d'après la revendication 1,
**caractérisé en ce que**
chacun des équipements à induction (21) est constitué d'un élément d'accouplement stationnaire (22) assigné à la machine-outil et d'un élément de charge (23) intégré dans le corps de mandrin (3) et qu'entre l'élément de charge (23) et le moteur électrique respectif (12), il est prévu une ligne électrique (14).

3. Mandrin de serrage d'après la revendication 1 ou 2,
**caractérisé en ce que**
chacun des mors de serrage (6) comporte une denture oblique (9) donnant sur le corps de mandrin (3), que dans le corps de mandrin (3), il est logé de manière mobile une crémaillère (8) pour chaque mors de serrage (6), que la crémaillère (8) comporte une denture oblique (10) correspondant à la denture oblique (9) des mors de serrage (6), que le mors de serrage (6) et la crémaillère (8) se laissent accoupler par la forme et que la crémaillère (8) est raccordée par entraînement avec une broche filetée (11) collaborant par entraînement avec le moteur électrique respectif (12).

4. Mandrin de serrage d'après une des revendications précédentes,
**caractérisé en ce que**
la position de serrage des mors de serrage (6) est atteinte à l'aide d'un mécanisme à ressort (31) bloquant chacun des mors de serrage (6) dans sa position définie par le moteur électrique (12).

5. Mandrin de serrage d'après la revendication 4,
**caractérisé en ce que**
la force du moteur électrique (12) est plus grande que celle du mécanisme à ressort (31).

6. Mandrin de serrage d'après la revendication 4 ou 5,
**caractérisé en ce que**
le mécanisme à ressort (31) est conçu sous la forme d'un paquet de ressort à disques ou en tant que ressort hélicoïdal à pression (32) dont la force respective s'oppose au mouvement d'avance du moteur électrique (12).

7. Mandrin de serrage d'après une des revendications précédentes,
**caractérisé en ce que**
dans le corps de mandrin (3), il est pratiqué une ouverture de passage (13) destinée à recevoir les pièces à usiner (2) et que l'axe longitudinal de l'ouverture de passage (13) est en alignement précis avec l'axe longitudinal (4) du corps de mandrin (3).

8. Mandrin de serrage d'après une des revendications précédentes,
**caractérisé en ce que**
chaque moteur électrique (12) est réglé par un équipement de commande (24) assigné à la machine-outil qui permet de déterminer la position du mors de serrage respectif (6) en dépendance de l'alignement de la pièce à usiner (2) serrée.
